# EUROPÄISCHE PATENTANMELDUNG

(11) **EP 4 202 269 A1**
(43) Veröffentlichungstag der Anmeldung: **28.06.2023**
(21) Anmeldenummer: 21217245.6
(22) Anmeldetag: 23.12.2021
(51) Int. Cl.: F16K 11/044, F16K 31/06, F16K 31/10, F16K 41/10

(54) **DICHTMEMBRAN FÜR EIN FLUIDVENTIL UND FLUIDVENTIL**

(71) Anmelder: AVS, Ingenieur J.C. Römer GmbH, 94481 Grafenau (DE)
(72) Erfinder: Jordan, Denis, 94481 Grafenau (DE)
(74) Vertreter: Wolf, Gerhard

(57) **Zusammenfassung**

Die Erfindung betrifft eine Dichtmembran für ein Fluidventil (1), das ein Ventilgehäuse (10) und eine Antriebseinheit (3) aufweist, wobei die Dichtmembran (15) hutartig ausgebildet ist und zum freiendseitigen Umschließen eines in das Ventilgehäuse (10) des Fluidventils (1) hineinragenden Abschnitt eines Ventilschließkörpers (2) ausgebildet ist, wobei die Dichtmembran (15) einen Fußabschnitt (15.1) aufweist, der außenumfangsseitig rotationsunsymmetrisch ausgebildet ist, wobei der Fußabschnitt (15.1) dazu vorgesehen ist, an einer Öffnung (12.1) des Ventilgehäuses (10) formschlüssig anzuliegen und wobei der Fußabschnitt (15.1) der Dichtmembran (15) dazu ausgebildet ist, zwischen dem Ventilgehäuse (10) und der Antriebseinheit (3) derart aufgenommen zu werden, dass die Öffnung (12.1) des Ventilgehäuses (10) zur Antriebseinheit (3) hin fluiddicht abgedichtet wird.

## Beschreibung

Die Erfindung betrifft eine Dichtmembran für ein Fluidventil sowie ein Fluidventil mit einer Dichtmembran.

Fluidventile zur Steuerung eines Fluidflusses sind grundsätzlich bekannt. Das Fluid ist dabei insbesondere eine Flüssigkeit. Derartige Fluidventile werden insbesondere im Lebensmittelbereich eingesetzt, beispielsweise in Wasserspendern, Kaffeemaschinen etc.

Derartige Fluidventile weisen ein Ventilgehäuse auf, in dem zumindest ein Fluidkanal ausgebildet ist. In dem Ventilgehäuse ist ein Ventilschließkörper vorgesehen, der durch eine Antriebseinheit bewegt, insbesondere um eine Schwenkachse verschwenkt wird. Durch die Verschwenkung kann eine Dichtmembran an einen Ventilsitz gedrückt werden, um den Fluidfluss durch das Fluidventil zu steuern.

Ein wesentlicher Nachteil bekannter Fluidventile besteht darin, dass diese bedingt durch Montageungenauigkeiten eine relativ große Streuung in Bezug auf das Schließverhalten aufweisen. Insbesondere kann es vorkommen, dass das Fluidventil aufgrund der Montageungenauigkeiten nur unzureichend schließt.

Ausgehend hiervon ist es Aufgabe der Erfindung, eine Dichtmembran für ein Fluidventil anzugeben, die ein exaktes Schließen des Fluidventils ohne Justieraufwand ermöglicht.

Die Aufgabe wird durch eine Dichtmembran mit den Merkmalen des unabhängigen Patentanspruchs 1 gelöst. Ein Fluidventil mit einer Dichtmembran ist Gegenstand des nebengeordneten Patentanspruchs 3. Bevorzugte Ausführungsformen der Dichtmembran bzw. des Fluidventils sind Gegenstand der Unteransprüche.

Gemäß einem Aspekt wird eine Dichtmembran für ein Fluidventil offenbart, das ein Ventilgehäuse und eine Antriebseinheit aufweist. Die Dichtmembran ist hutartig ausgebildet und zum freiendseitigen Umschließen eines in das Ventilgehäuse des Fluidventils hineinragenden Abschnitts eines Ventilschließkörpers ausgebildet, um an einem Ventilsitz des Fluidventils angepresst zu werden und damit ein Schließen eines Fluidkanals zu gewährleisten. Die Dichtmembran weist einen Fußabschnitt auf, der außenumfangsseitig rotationsunsymmetrisch ausgebildet ist. Der Fußabschnitt ist dazu vorgesehen, an einer Öffnung des Ventilgehäuses formschlüssig anzuliegen. Der Fußabschnitt der Dichtmembran ist ferner dazu ausgebildet, zwischen dem Ventilgehäuse und der Antriebseinheit derart aufgenommen zu werden, dass die Öffnung des Ventilgehäuses zur Antriebseinheit hin fluiddicht abgedichtet wird.

Der technische Vorteil der Dichtmembran besteht darin, dass durch die nicht rotationssymmetrische Form des Fußabschnitts die Dichtmembran nur in einer vordefinierten Drehlage (in Bezug auf die Hochachse der Dichtmembran) in das Ventilgehäuse einfügbar ist. Dadurch nimmt die Dichtmembran stets eine definierte Lage in Bezug auf einen im Ventilgehäuse angeordneten Ventilsitz ein, so dass eine hochgenaue Funktionalität des Fluidventils ohne Justieren der Drehlage der Dichtmembran gewährleistet ist.

Gemäß einem Ausführungsbeispiel weist der Fußabschnitt der Dichtmembran außenumfangsseitig eine polygone oder im Wesentlichen polygone Form auf. Insbesondere kann der Fußabschnitt eine rechteckförmige oder im Wesentlichen rechteckförmige Umfangsform aufweisen. Das Ventilgehäuse umfasst vorzugsweise einen Aufnahmeraum für die Dichtmembran, der einen invers ausgebildeten Öffnungsrand aufweist, in den der Fußabschnitt der Dichtmembran einsetzbar ist. Dadurch wird erreicht, dass die Dichtmembran sehr exakt und in einer definierten Drehlage in das Ventilgehäuse einsetzbar ist, so dass die Dichtmembran eine definierte Ausrichtung relativ zum Ventilsitz einnimmt und damit ein definiertes Schließverhalten erreicht wird.

Alternativ oder zusätzlich kann die Dichtmembran außenumfangsseitig auch einen Vorsprung oder eine Einkerbung bzw. eine Einbuchtung aufweisen, um die Rotationsunsymmetrie zu erreichen.

Gemäß einem weiteren Aspekt wird ein Fluidventil offenbart. Das Fluidventil umfasst eine magnetische Antriebseinheit für einen Ventilschließkörper. Die Antriebseinheit weist einen Kern, eine abschnittsweise den Kern umgebende Spule und einen durch die Bestromung der Spule und die daraus resultierende Magnetkraft bewegbaren Anker auf. Der Ventilschließkörper ragt abschnittsweise in ein Ventilgehäuse hinein, steht mit dem Anker in Wirkverbindung und ist durch die Bewegung des Ankers um eine Schwenkachse verschwenkbar in zumindest eine erste und eine zweite Schwenkstellung positionierbar. Durch die Schwenkstellung des Ventilschließkörpers wird eine Fluidverbindung im Ventilgehäuse geschaltet. Der in das Ventilgehäuse hineinragende Abschnitt des Ventilschließkörpers ist freiendseitig durch eine Dichtmembran umgeben. Die Dichtmembran ist hutartig ausgebildet und umgibt den in das Ventilgehäuse hineinragenden Abschnitt des Ventilschließkörpers fluiddicht. Die Dichtmembran weist zudem einen außenumfangsseitig rotationsunsymmetrisch ausgebildeten Fußabschnitt auf, der an einer Öffnung des Ventilgehäuses formschlüssig anliegt. Der Fußabschnitt der Dichtmembran ist zwischen dem Ventilgehäuse und der Antriebseinheit derart aufgenommen, dass die Öffnung des Ventilgehäuses zur Antriebseinheit hin fluiddicht abgedichtet wird.

Der technische Vorteil des Fluidventils besteht darin, dass durch die nicht rotationssymmetrische Form des Fußabschnitts die Dichtmembran nur in einer vordefinierten Drehlage (in Bezug auf die Längsachse der Dichtmembran) in das Ventilgehäuse einfügbar ist. Dadurch nimmt die Dichtmembran stets eine definierte Lage in Bezug auf einen im Ventilgehäuse angeordneten Ventilsitz ein, so dass eine hochgenaue Funktionalität des Fluidventils ohne Justieren der Drehlage der Dichtmembran gewährleistet ist.

Gemäß einem Ausführungsbeispiel des Fluidventils weist der Fußabschnitt der Dichtmembran außenumfangsseitig eine polygone oder im Wesentlichen polygone Form auf. Insbesondere kann der Fußabschnitt eine rechteckförmige oder im Wesentlichen rechteckförmige Umfangsform aufweisen. Das Ventilgehäuse umfasst vorzugsweise einen Aufnahmeraum für die Dichtmembran, der einen invers ausgebildeten Öffnungsrand aufweist, in den der Fußabschnitt der Dichtmembran einsetzbar ist. Dadurch wird erreicht, dass die Dichtmembran sehr exakt und in einer definierten Drehlage in das Ventilgehäuse einsetzbar ist, so dass die Dichtmembran eine definierte Ausrichtung relativ zum Ventilsitz einnimmt und damit ein definiertes Schließverhalten erreicht wird.

Alternativ oder zusätzlich kann die Dichtmembran außenumfangsseitig auch einen Vorsprung oder eine Einkerbung bzw. eine Einbuchtung aufweisen, um die Rotationsunsymmetrie zu erreichen.

Gemäß einem Ausführungsbeispiel des Fluidventils weist der Fußabschnitt der Dichtmembran eine Innenöffnung auf, die innenumfangsseitig eine runde oder polygone Form hat. Durch diese Innenöffnung kann der Ventilschließkörper in die Dichtmembran hineinreichen und zudem die Dichtmembran an dem Ventilgehäuse angepresst werden, um die Dichtigkeit herzustellen.

Gemäß einem Ausführungsbeispiel des Fluidventils weist das Ventilgehäuse einen Aufnahmeraum mit einer Öffnung auf. Der Rand der Öffnung des Aufnahmeraums bildet umfangseitig eine Radialdichtfläche aus, die zur Anlage des Fußbereichs der Dichtmembran vorgesehen ist. Durch das Anpressen des Fußbereichs der Dichtmembran an den Rand der Öffnung des Aufnahmeraums und die dadurch erfolgte Radialabdichtung wird der Übergang zwischen dem Ventilgehäuse und der Antriebseinheit wirksam abgedichtet.

Gemäß einem Ausführungsbeispiel des Fluidventils weist die Öffnung des Aufnahmeraums eine rotationsunsymmetrische Umfangsform auf. Diese Umfangsform ist vorzugsweise an die außenumfangsseitige Umfangsform des Fußbereichs der Dichtmembran angepasst, so dass diese formschlüssig in die Öffnung des Aufnahmeraums einsetzbar ist.

Gemäß einem Ausführungsbeispiel des Fluidventils weist die Antriebseinheit einen Ventilgehäuseträger auf, der zur Kopplung mit dem Ventilgehäuse ausgebildet ist. Der Ventilgehäuseträger weist einen Fortsatz auf, der in Richtung des Ventilgehäuses absteht und an die Innenöffnung des Fußabschnitts der Dichtmembran formangepasst ist. Beim Zusammenfügen der Antriebseinheit und des Ventilgehäuses wird der Fortsatz in die Innenöffnung des Fußabschnitts der Dichtmembran eingesetzt und damit die Dichtmembran in ihrer Lage fixiert.

Gemäß einem Ausführungsbeispiel des Fluidventils ist der Fußabschnitt der Dichtmembran durch das Zusammenfügen des Ventilgehäuses und der Antriebseinheit zwischen dem Ventilgehäuse und dem Fortsatz des Ventilgehäuseträgers radial verpresst. Insbesondere drückt der Fortsatz des Ventilgehäuseträgers innenumfangsseitig an die Dichtmembran und erzeugt damit einen radial nach außen wirkenden Druck auf die Dichtmembran, wodurch die Radialverpressung erreicht wird. Dadurch wird eine hohe Dichtigkeit der Schnittstelle zwischen Ventilgehäuse und Antriebseinheit erreicht.

Gemäß einem Ausführungsbeispiel des Fluidventils weist die Dichtmembran einen Kappenabschnitt mit einem Innenquerschnitt auf, der an die Form des in das Ventilgehäuse hineinragenden Abschnitts des Ventilschließkörpers derart angepasst ist, dass der Abschnitt des Ventilschließkörpers formschlüssig in den Kappenabschnitt der Dichtmembran aufgenommen ist. Dadurch wird eine sichere Verbindung der Dichtmembran mit dem Ventilschließkörper erreicht, was vorteilhaft für das Schließverhalten des Fluidventils ist.

Gemäß einem Ausführungsbeispiel des Fluidventils weist der Kappenabschnitt der Dichtmembran einen rechteckförmigen oder im Wesentlichen rechteckförmigen Querschnitt mit einem Paar von Breitseiten und einem Paar von Schmalseiten auf. Die Breitseiten sind dabei länger ausgebildet als die Schmalseiten. Durch die rechteckförmige Querschnittsform wird erreicht, dass die Dichtmembran zum einen eine relativ großflächige Anlage an dem Ventilsitz bietet, zum anderen aber aufgrund der geringeren Breite der Schmalseiten die Dichtmembran im Aufnahmeraum des Ventilgehäuses verschwenkbar ist.

Gemäß einem Ausführungsbeispiel des Fluidventils ist zumindest eine Breitseite des Kappenabschnitts zur Anlage gegenüber einem im Ventilgehäuse ausgebildeten Ventilsitz vorgesehen. Insbesondere wird die Breitseite des Kappenabschnitts mittels des Ventilschließkörpers an den Ventilsitz angepresst. Dadurch kann eine relativ großflächige Ventilöffnung, die im Bereich des Ventilsitzes vorgesehen ist, durch die Dichtmembran verschlossen werden.

Gemäß einem Ausführungsbeispiel des Fluidventils weist das Ventilgehäuse eine Koppelkontur zur Verbindung mit der Antriebseinheit auf. Die Koppelkontur ist derart ausgebildet, dass ein in Bezug auf die Drehlage der Antriebseinheit relativ zum Ventilgehäuse definiertes Ankoppeln des Ventilgehäuses an der Antriebseinheit bewirkt wird. Damit wird sichergestellt, dass die Kopplung zwischen der Antriebseinheit und dem Ventilgehäuse in einer definierten Drehlage erfolgt und damit der Ventilschließkörper eine definierte Ausrichtung relativ zum Ventilsitz hat. Dadurch wird ein definiertes Schließverhalten des Fluidventils erreicht.

Gemäß einem Ausführungsbeispiel des Fluidventils umfasst die Koppelkontur Kopplungsabschnitte, die zur rastenden Befestigung des Ventilgehäuses an der Antriebseinheit ausgebildet sind. Dadurch kann eine werkzeuglose und schnelle Kopplung der Antriebseinheit mit dem Ventilgehäuse erreicht werden.

Gemäß einem Ausführungsbeispiel weist das Ventilgehäuse zumindest eine Aufnahme für eine Schlauchschnellkupplung auf. Dadurch können an das Ventilgehäuse direkt Schläuche angekoppelt werden, wodurch der Installationsaufwand reduziert wird.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand mehrerer Figuren an Ausführungsbeispielen näher erläutert. Es zeigen:
- Fig. 1: beispielhaft eine Längsschnittdarstellung eines Fluidventils;
- Fig. 2: beispielhaft ein Ventilgehäuse in einer perspektivischen Darstellung;
- Fig. 3: beispielhaft eine Längsschnittdarstellung mittig durch das in Fig. 2 gezeigte Ventilgehäuse;
- Fig. 4: beispielhaft eine Detaildarstellung des in Fig. 3 mit Z gekennzeichneten Bereichs zur Veranschaulichung des Ventilsitzes;
- Fig. 5: beispielhaft eine perspektivische Darstellung einer Dichtmembran; und
- Fig. 6: beispielhaft eine perspektivische Darstellung eines Ventilschließkörpers.

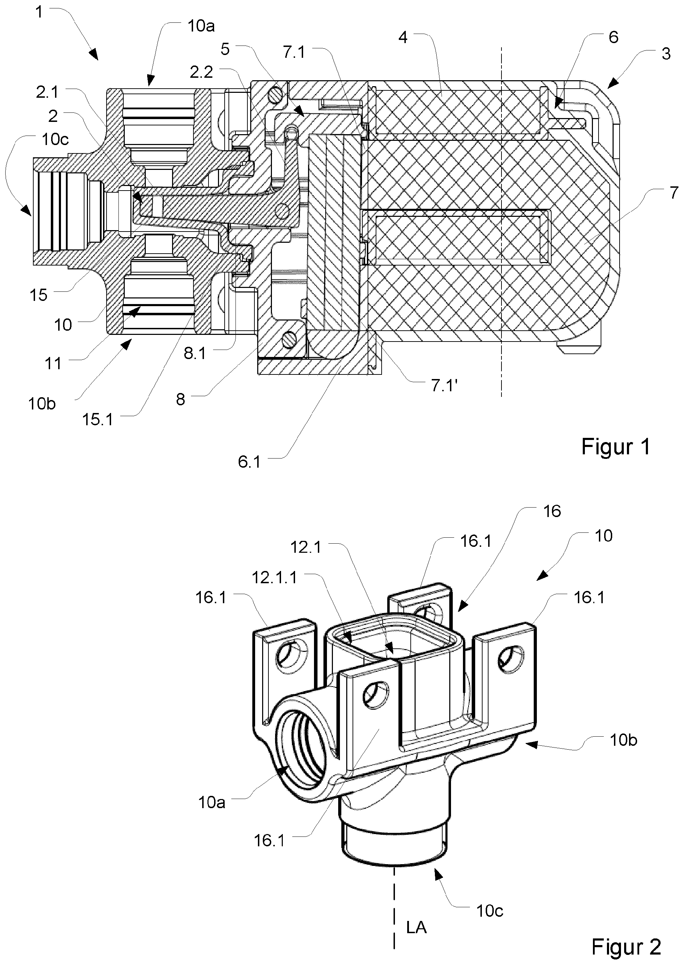

Figur 1 zeigt beispielhaft und schematisch eine Längsschnittdarstellung mittig durch ein Fluidventil 1 mit einem Ventilgehäuse 10.

Das Fluidventil 1 umfasst eine Antriebseinheit 3 für einen Ventilschließkörper 2 und ein Ventilgehäuse 10, in dem zumindest ein Fluidkanal 11 vorgesehen ist. Der Ventilschließkörper 2 reicht in das Ventilgehäuse 10 hinein und ist mit der Antriebseinheit 3 derart gekoppelt, dass der Ventilschließkörper 2 durch die Antriebseinheit 3 bewegbar, insbesondere verschwenkbar ist. Insbesondere kann der Ventilschließkörper 2 eine erste und eine zweite Schwenkstellung einnehmen, um abhängig von der Schwenkstellung eine Ventilöffnung 10.1 freizugeben bzw. zu schließen. Im gezeigten Ausführungsbeispiel weist das Ventilgehäuse 10 drei Anschlüsse 10a, 10b, 10c auf, wobei abhängig von der Schwenkstellung des Ventilschließkörpers 2 jeweils ein Paar von Anschlüssen 10a, 10b, 10c miteinander fluidisch verbunden ist. Abweichend davon kann das Fluidventil 1 aber auch lediglich zwei Anschlüsse 10a, 10b, 10c aufweisen, wobei abhängig von der Schwenkstellung des Ventilschließkörpers 2 eine fluidische Verbindung zwischen den beiden Anschlüssen freigegeben wird oder nicht. Das Ventilgehäuse 10 kann an den Anschlüssen 10a, 10b, 10c jeweils eine Aufnahme 17 für eine Schlauchschnellkupplung aufweisen. Die Schlauchschnellkupplung kann dabei derart ausgebildet sein, dass ein freies Ende eines Schlauchs in die Schlauchschnellkupplung einführbar ist und dadurch eine fluiddichte Verbindung zwischen dem Schlauchinnenraum und dem im Ventilgehäuse 10 ausgebildeten Fluidkanal 11 gebildet wird. Die Schlauchschnellkupplung kann zudem Sicherungsmittel gegen ein unerwünschtes Herauslösen des Schlauchs aus der Schlauchschnellkupplung aufweisen.

Das Fluidventil 1 weist beispielsweise die folgende Funktionalität auf: die Antriebseinheit 3 ist dazu ausgebildet, die Schwenkstellung eines Ankers 5 zu beeinflussen. Die Antriebseinheit 3 ist beispielsweise eine elektromagnetische Antriebseinheit, d.h. bei Bestromung einer Spule 4 der Antriebseinheit 3 wird eine Magnetkraft erzeugt, mittels der der Anker 5 aus einer zweiten Schwenkstellung in eine erste Schwenkstellung bewegt wird. Diese erste Schwenkstellung ist in Fig. 1 gezeigt. Diese erste Schwenkstellung wird so lange gehalten, solange die Spule 4 bestromt ist. Der Anker 5 ist vorzugsweise mittels einer Feder derart federbelastet, dass dieser nach dem Beenden des Stromflusses durch die Spule 4 in die zweite Schwenkstellung zurückbewegt wird.

Wie in Fig. 1 gezeigt, ist der Ventilschließkörper 2 mit dem Anker 5 derart gekoppelt, dass der Ventilschließkörper 2 durch den Anker 5 bewegt, insbesondere verschwenkt wird. Insbesondere nimmt der Ventilschließkörper 2 im Ventilgehäuse 10 abhängig von der Schwenkstellung des Ankers 5 eine erste oder zweite Stellung ein und definiert damit die Ventilstellung bzw. das Freigeben bzw. Verschließen zumindest eines Fluidkanals 11.

Die Antriebseinheit 2 umfasst beispielsweise einen Grundkörper 6. Der Grundkörper 6 bildet die tragende Grundstruktur der Antriebseinheit 3. Er ist vorzugsweise als Spitzgussteil, insbesondere als Kunststoffspritzgussteil, ausgebildet. Der Grundkörper 6 weist eine rohrförmig oder im Wesentlichen rohrförmig ausgebildete Aufnahme für die Spule 4 auf. Innerhalb der Aufnahme ist eine erste Einschuböffnung ausgebildet, in die ein Schenkel eines U-förmig ausgebildeten Kerns 7 einschiebbar ist.

Der Grundkörper 6 umfasst des Weiteren eine Ankeraufnahme 6.1. Diese Ankeraufnahme 6.1 schließt an die Aufnahme der Spule 4 unmittelbar an und ist dazu ausgebildet, den Anker 5 verschwenkbar zu lagern. Die Ankeraufnahme 6.1 ist beispielsweise schalenartig, insbesondere rechteckschalenartig ausgebildet und weist einen Bodenbereich und mehrere Wandungsbereiche auf. Die Wandungsbereiche sind mit dem Bodenbereich verbunden, umgeben den Bodenbereich umfangsseitig und stehen von dem Bodenbereich ab, und zwar zu einer Seite, die der Spule 4 abgewandt ist.

In dem Bodenbereich ist eine zweite Einschuböffnung vorgesehen, in die ein zweiter Schenkel eines U-förmig ausgebildeten Kerns 7 einschiebbar ist. Der U-förmige Kern 7 ist damit jochartig ausgebildet, wobei ein Schenkel des Kerns 7 durch die Spule 4 umgeben ist, so dass bei Bestromung der Spule 4 ein geschlossener magnetischer Kreis durch den Kern 7 und den die Polflächen 7.1, 7.1' des Kerns 7 überspannenden Anker 5 gebildet wird.

An der Ankeraufnahme 6.1 ist an der dem Kern 7 bzw. der Spule 4 abgewandten Seite ein Ventilgehäuseträger 8 vorgesehen. Der Ventilgehäuseträger 8 ist dazu ausgebildet, die Verbindung zwischen der Antriebseinheit 2 und dem Ventilgehäuse 10 herzustellen. Der Ventilgehäuseträger 8 ist beispielsweise mit der Wandung der Ankeraufnahme 6.1 verbunden und verschließt insbesondere die schalenartig ausgebildete Ankeraufnahme 6.1, abgesehen von einer Durchführöffnung für den Ventilschließkörper 2.

Der Ventilgehäuseträger 8 weist Befestigungsmittel auf, mittels denen sich das Ventilgehäuse 10 zur lösbar an der Antriebseinheit 2 befestigen lässt. Wie insbesondere in Fig. 2 zu erkennen, weist das Ventilgehäuse 10 beispielsweise mehrere laschenartig ausgebildete Koppelabschnitte 16.1 auf, die mit Rastnasen am Ventilgehäuseträger 8 zusammenwirken und zur Herstellung einer Rastverbindung mit dem Ventilgehäuseträger 8 dienen. Auch eine invers ausgebildete Fixierung ist grundsätzlich denkbar, d.h. dass die Koppelabschnitte an dem Ventilgehäuseträger 8 vorgesehen sind, die mit Rastnasen des Ventilgehäuses 10 zusammenwirken.

Fig. 2 zeigt eine perspektivische Seitendarstellung des Ventilgehäuses 10. Das Ventilgehäuse 10 weist oberseitig eine Koppelkontur 16 auf, die an die Antriebseinheit 3, insbesondere den Ventilgehäuseträger 8 derart formangepasst ist, dass eine Kopplung zwischen der Antriebseinheit 3 und dem Ventilgehäuse 10 lediglich in einer definierten Drehlage möglich ist. Dadurch wird sichergestellt, dass der Ventilschließkörper 2, der unterseitig aus der Antriebseinheit 3 vorsteht, in einer vorgegebenen Ausrichtung in das Ventilgehäuse 10 eingeführt wird, so dass der Ventilschließkörper 2 eine definierte Ausrichtung relativ zum Ventilsitz einnimmt und damit eine gewünschte Schließwirkung erzielt.

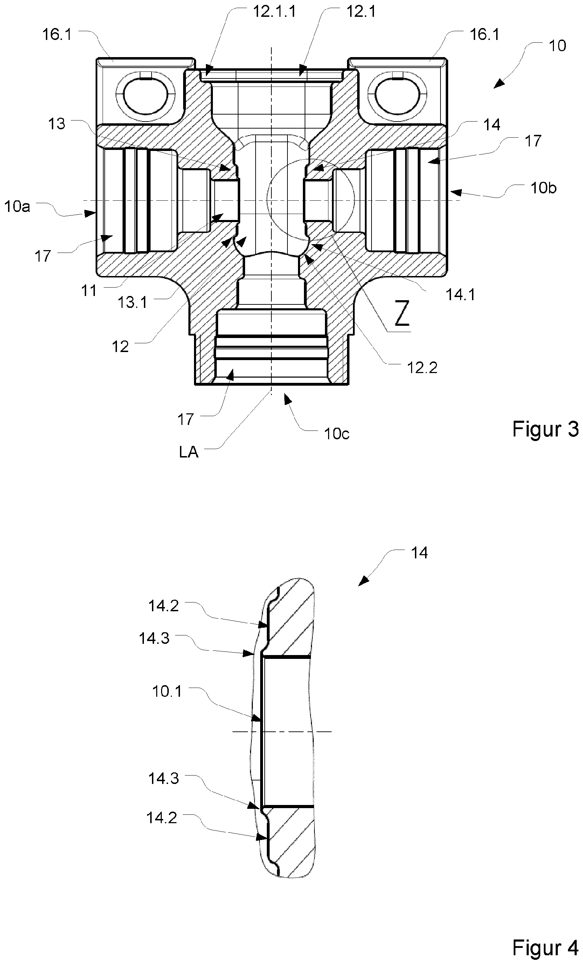

Fig. 3 zeigt eine Schnittdarstellung mittig durch das in Fig. 2 gezeigte Ventilgehäuse 10, und zwar derart, dass ein Längsschnitt durch die im Ventilgehäuse 10 ausgebildeten Fluidkanäle 11 entsteht.

In dem Ventilgehäuse 10 ist ein Paar von Anschlüssen 10a, 10b diametral gegenüberliegend und ein weiterer Anschluss 10c unterhalb und der Öffnung 12.1 des Aufnahmeraums 12 gegenüberliegend vorgesehen. In diesem Ausführungsbeispiel kann je nach Stellung des Ventilschließkörpers entweder eine Fluidverbindung zwischen den Anschlüssen 10a und 10c oder zwischen den Anschlüssen 10b und 10c hergestellt werden. Das Fluidventil 1 bildet dabei eine Fluidweiche, bei der der als Einlass fungierende Anschluss 10c entweder mit dem Anschluss 10a oder dem Anschluss 10b als Auslass gekoppelt wird, oder bei der der als Auslass fungierende Anschluss 10c entweder mit dem Anschluss 10a oder dem Anschluss 10b als Einlass gekoppelt wird.

In einem alternativen Ausführungsbeispiel kann der Anschluss 10b entfallen, so dass durch das Fluidventil 1-je nach Schaltzustand - entweder der Fluidkanal zwischen den Anschlüssen 10a und 10c geöffnet oder geschlossen ist.

Der Ventilschließkörper 2 weist im gezeigten Ausführungsbeispiel zwei Schenkel 2.1, 2.2 auf. Der erste Schenkel 2.1 ragt in einen Aufnahmeraum 12 hinein. Ein zweiter Schenkel 2.2 ist vorzugsweise schräg, insbesondere rechtwinklig oder im Wesentlichen rechtwinklig zum ersten Schenkel 2.1 ausgerichtet und verbindet den Ventilschließkörper 2 mit dem Anker 5.

Der erste Schenkel 2.1 ist abschnittsweise und insbesondere im Bereich dessen freien Endes von der Dichtmembran 15 umgeben. Die Dichtmembran 15 dient zum einen als Dichtelement zur Abdichtung einer am Ventilsitz vorgesehenen Ventilöffnung 10.1, zum anderen zur Abdichtung der Öffnung 12.1 des Aufnahmeraums 12 in Richtung der Antriebseinheit 3.

In dem Aufnahmeraum 12 ist der zumindest eine Ventilsitz 13, 14 vorgesehen. Der Ventilsitz 13, 14 ist vorzugsweise an der Seitenwand des Aufnahmeraums 12 vorgesehen, die parallel oder im Wesentlichen parallel zur Längsachse LA des Aufnahmeraums 12 verläuft. Im gezeigten Ausführungsbeispiel ist an einander gegenüberliegenden Seitenwänden des Aufnahmeraums 12 ein Paar von Ventilsitzen 13, 14 vorgesehen, so dass ein erster Ventilsitz 13 einem zweiten Ventilsitz 14 diametral und in gleicher Höhenposition gegenüberliegt.

Das Ventilgehäuse 10 ist beispielsweise einstückig als Spitzgussteil, insbesondere als Kunststoffspritzgussteil, ausgebildet. Der zumindest eine Ventilsitz 13, 14 ragt derart in den Aufnahmeraum 12 hinein, dass sich durch den Ventilsitz 13, 14 eine Hinterschneidung 13.1, 14.1 bildet. Die Hinterschneidung 13.1, 14.1 ist dabei im unteren Bereich 12.2 des Aufnahmeraums 12 und unterhalb der Ventilsitze 13, 14 der Öffnung 12.1 gegenüberliegend vorgesehen.

Fig. 4 zeigt beispielhaft die Ausgestaltung des zweiten Ventilsitzes 14 mehr im Detail. Es sei darauf verwiesen, dass der erste Ventilsitz 13 vorzugsweise identisch zum zweiten Ventilsitz 14 ausgebildet ist. Der Ventilsitz 14 weist eine ringförmige, insbesondere kreisringförmige Erhebung 14.2 auf, die von der Seitenwand in den Aufnahmeraum 12 vorsteht. Im Inneren der kreisringförmigen Erhebung 14.2 ist die Ventilöffnung 10.1 vorgesehen, die bei Anlage des mit der Dichtmembran 15 versehenen Ventilschließkörpers 2 durch diesen fluiddicht verschlossen wird.

Die Erhebung 14.2 bildet eine flächige Anlage für die Dichtmembran 15 bzw. den Ventilschließkörper 2, so dass der Ventilschließkörper 2 durch die Erhebung 14.2 in seinem Verschwenkweg begrenzt wird.

Vorzugsweise ist der Anker 5 anschlagsfrei in der Ankeraufnahme 6.1 gehalten, d.h. die Schwenkbewegung des Ankers 5 wird weder in der ersten noch in der zweiten Schwenkstellung durch ein Anliegen eines Ankerabschnitts an Komponenten, die den Anker 5 umgeben, begrenzt. Vielmehr erfolgt die Begrenzung der Schwenkbewegung des Ankers 5 durch den Ventilschließkörper 2, der abhängig von der Schwenkstellung des Ankers 5 an den Ventilsitzen 13, 14 bzw. in dem Fall, dass lediglich ein Ventilsitz vorgesehen ist, an einem diesem Ventilsitz gegenüberliegenden Anschlag im Ventilgehäuse 10 zur Anlage gelangt.

Auf der Erhebung 14.2 ist vorzugsweise eine Dichtkante 14.3 vorgesehen, die dazu ausgebildet ist, sich bei Anlage der Dichtmembran 15 an der Erhebung 14.2 in die Dichtmembran 15 einzudrücken. Dadurch wird eine hohe Dichtigkeit der durch den Ventilschließkörper 2 verschlossenen Ventilöffnung 10.1 erreicht.

Nachfolgend wird die Dichtmembran 15 und das Zusammenwirken der Dichtmembran mit dem Ventilgehäuse 10 bzw. der Antriebseinheit 3 näher beschrieben.

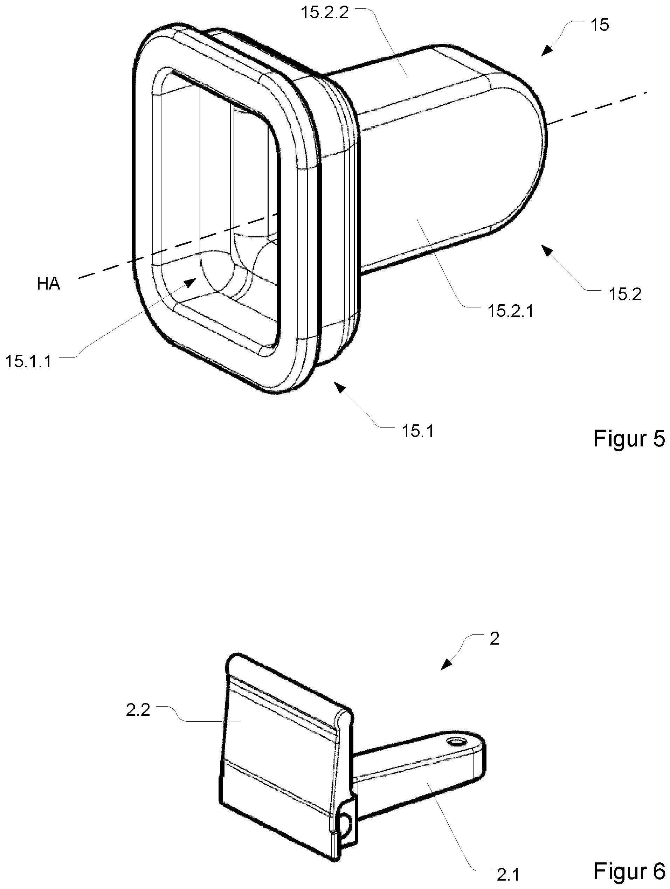

Fig. 5 zeigt die Dichtmembran 15 in Alleinstellung in einer perspektivischen Ansicht. Die Dichtmembran 15 ist hut- bzw. kappenartig ausgebildet und weist einen Fußabschnitt 15.1 und einen Kappenabschnitt 15.2 auf. Hut- bzw. kappenartige Ausbildung bedeutet im Sinne der vorliegenden Offenbarung, dass die Dichtmembran 15 einen Innenraum aufweist, die über eine Innenöffnung 15.1.1 zugänglich ist, aber im Übrigen geschlossen ausgebildet ist, um die Abdichtung des Ventilgehäuses 10 in Richtung der Antriebseinheit 3 zu ermöglichen.

Der Fußabschnitt 15.1 ist an die Öffnung 12.1 des Aufnahmeraums 10 formangepasst. Der Fußabschnitt 15.1 weist eine rotationsunsymmetrische Umfangsform auf, im gezeigten Ausführungsbeispiel eine polygone Umfangsform mit abgerundeten Ecken. Wie in Fig. 2 zu erkennen, weist die Öffnung 12.1 des Aufnahmeraums 12 eine entsprechende inverse Form auf, so dass der Fußabschnitt 15.1 formschlüssig in die Öffnung 12.1 einsetzbar ist. Dadurch wird erreicht, dass die Dichtmembran 15 nur in einer vorgegebenen Drehlage (Drehlage in Bezug auf die Hochachse HA der Dichtmembran 15) in das Ventilgehäuse 10 einsetzbar ist. Dies hat den entscheidenden Vorteil, dass damit der in den Aufnahmeraum 12 hineinragende Kappenabschnitt 15.2 eine fest vorgegebene Ausrichtung zu dem zumindest einen Ventilsitz 13, 14 einnimmt und damit keine Leckagen durch eine nicht korrekt ausgerichtete Dichtmembran 15 auftreten können.

Vorzugsweise ist die rotationsunsymmetrische Umfangsform der Dichtmembran 15 derart gewählt, dass lediglich einen Einbau der Dichtmembran 15 in das Ventilgehäuse 10 in einer vordefinierten rotativen Ausrichtung (d.h. der Drehlage um die Längsachse LA als Drehachse) möglich ist. Alternativ kann die Dichtmembran 15 beispielsweise spiegelsymmetrisch zu einer Mittelebene ausgebildet sein, so dass ein Einbau in zwei Drehlagen möglich ist, die um 180° zueinander verdreht sind.

Wie in Fig. 1 zu erkennen ist, ist die Dichtmembran 15 zwischen der Antriebseinheit 3 und dem Ventilgehäuse 10 vorgesehen, um das Ventilgehäuse 10 in Richtung der Antriebseinheit abzudichten. Der Ventilgehäuseträger 8 der Antriebseinheit 3 weist einen Fortsatz 8.1 auf, der mit seiner Außenseite innenumfangsseitig an der Innenöffnung 15.1.1 des Fußbereichs 15.1 der Dichtmembran 15 anliegt. Der Fortsatz 8.1 ist derart an die Innenöffnung 15.1.1 des Fußbereich 15.1 formangepasst, dass die Dichtmembran 15 im Fußbereich 15.1 radial gegen den Rand 12.1.1 der Öffnung 12.1 angepresst und damit der Aufnahmeraum 12 am Übergang zwischen dem Ventilgehäuse 10 und dem Ventilgehäuseträger 8 abgedichtet ist. Insbesondere wird die Dichtmembran 15 zwischen dem Fortsatz 8.1 des Ventilgehäuseträgers 8 und dem Ventilgehäuse 10 radial verpresst.

Wie aus der Zusammenschau der Figuren 5 und 6 erkennbar, ist der Kappenabschnitt 15.2 der Dichtmembran 15 an das freie Ende des ersten Schenkels 2.1 des Ventilschließkörpers 2 formangepasst, so dass das freie Ende des ersten Schenkels 2.1 passgenau in der Dichtmembran 15 aufgenommen wird. Insbesondere weist der Kappenabschnitt 15.2 einen rechteckförmigen oder im Wesentlichen rechteckförmigen Querschnitt (Querschnittsebene senkrecht zur Hochachse HA) auf und wird umfangsseitig durch ein Paar von zueinander parallel verlaufenden und beabstandeten Breitseiten 15.2.1 und einem Paar von zueinander parallel verlaufenden und beabstandeten Schmalseiten 15.2.2 begrenzt. Die Breitseiten 15.2.1 sind dabei länger ausgebildet als die Schmalseiten 15.2.2. Die Wandungsstärke des Kappenabschnitts 15.2 ist vorzugsweise umfangseitig konstant oder im Wesentlichen konstant, so dass auch die Ausnehmung im Inneren des Kappenabschnitt 15.2 eine rechteckförmige oder im Wesentlichen rechteckförmige Querschnittsform aufweist. Damit ist der Kappenabschnitt 15.2 dazu ausgebildet, das freie Ende des ersten Schenkels 2.1 des Ventilschließkörpers 2 formschlüssig aufzunehmen. Damit wird erreicht, dass die Breitseiten 15.2.1 des Kappenabschnitts 15.2 parallel zu dem zumindest einen Ventilsitz 13, 14 ausgerichtet sind und damit ein exaktes Schließverhalten des Fluidventils erreicht wird.

Vorzugsweise ist auch das freie Ende der Dichtmembran 15 an das freie Ende des Ventilschließkörpers 2 formangepasst. Insbesondere weist sowohl die Dichtmembran 15 als auch der erste Schenkel 2.1 des Ventilschließkörpers 2 ein abgerundetes freies Ende auf, so dass eine verbesserte Umströmbarkeit der Dichtmembran erreicht wird.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Fluidventil
- 2: Ventilschließkörper
- 2.1: erster Schenkel
- 2.2: zweiter Schenkel
- 3: Antriebseinheit
- 4: Spule
- 5: Anker
- 6: Grundkörper
- 6.1: Ankeraufnahme
- 7: Kern
- 7.1,7.1': Polfläche
- 8: Ventilgehäuseträger
- 8.1: Fortsatz

- 10: Ventilgehäuse
- 10a, b, c: Anschluss
- 10.1: Ventilöffnung
- 11: Fluidkanal
- 12: Aufnahmeraum
- 12.1: Öffnung
- 12.1.1: Rand
- 12.2: unterer Bereich
- 13: erster Ventilsitz
- 13.1: Hinterschneidung
- 14: zweiter Ventilsitz
- 14.1: Hinterschneidung
- 14.2: ringförmige Erhebung
- 14.3: Dichtkante
- 15: Dichtmembran
- 15.1: Fußbereich
- 15.1.1: Innenöffnung
- 15.2: Kappenabschnitt
- 15.2.1: Breitseite
- 15.2.2: Schmalseite
- 16: Koppelkontur
- 16.1: Koppelabschnitt
- 17: Aufnahme

- HA: Hochachse
- LA: Längsachse des Aufnahmeraums

## Patentansprüche

1. Dichtmembran für ein Fluidventil (1), das ein Ventilgehäuse (10) und eine Antriebseinheit (3) aufweist, wobei die Dichtmembran (15) hutartig ausgebildet ist und zum freiendseitigen Umschließen eines in das Ventilgehäuse (10) des Fluidventils (1) hineinragenden Abschnitts eines Ventilschließkörpers (2) ausgebildet ist, wobei die Dichtmembran (15) einen Fußabschnitt (15.1) aufweist, der außenumfangsseitig rotationsunsymmetrisch ausgebildet ist, wobei der Fußabschnitt (15.1) dazu vorgesehen ist, an einer Öffnung (12.1) des Ventilgehäuses (10) formschlüssig anzuliegen und wobei der Fußabschnitt (15.1) der Dichtmembran (15) dazu ausgebildet ist, zwischen dem Ventilgehäuse (10) und der Antriebseinheit (3) derart aufgenommen zu werden, dass die Öffnung (12.1) des Ventilgehäuses (10) zur Antriebseinheit (3) hin fluiddicht abgedichtet wird.

2. Dichtmembran nach Anspruch 1, **dadurch gekennzeichnet, dass** der Fußabschnitt (15.1) der Dichtmembran (15) außenumfangsseitig eine polygone oder im Wesentlichen polygone Form aufweist.

3. Fluidventil umfassend eine magnetische Antriebseinheit (3) für einen Ventilschließkörper (2), wobei die Antriebseinheit (3) einen Kern (7), eine abschnittsweise den Kern (7) umgebende Spule (4) und einen durch die Bestromung der Spule (4) und die daraus resultierende Magnetkraft bewegbaren Anker (5) aufweist, wobei der Ventilschließkörper (2) abschnittsweise in ein Ventilgehäuse (10) hineinragt, mit dem Anker (5) in Wirkverbindung steht und durch die Bewegung des Ankers (5) um eine Schwenkachse (SV) verschwenkbar in zumindest eine erste und eine zweite Schwenkstellung positionierbar ist, wobei durch die Schwenkstellung des Ventilschließkörpers (2) eine Fluidverbindung im Ventilgehäuse (10) geschaltet wird, wobei der in das Ventilgehäuse (10) hineinragende Abschnitt des Ventilschließkörpers (2) freiendseitig durch eine Dichtmembran (15) umgeben ist, wobei die Dichtmembran (15) hutartig ausgebildet ist und den in das Ventilgehäuse (10) hineinragenden Abschnitt des Ventilschließkörpers (2) fluiddicht umgibt, wobei die Dichtmembran (15) einen außenumfangsseitig rotationsunsymmetrisch ausgebildeten Fußabschnitt (15.1) aufweist, der an einer Öffnung (12.1) des Ventilgehäuses (10) formschlüssig anliegt und wobei der Fußabschnitt (15.1) der Dichtmembran (15) zwischen dem Ventilgehäuse (10) und der Antriebseinheit (3) derart aufgenommen ist, dass die Öffnung (12.1) des Ventilgehäuses (10) zur Antriebseinheit (3) hin fluiddicht abgedichtet wird.

4. Fluidventil nach Anspruch 3, **dadurch gekennzeichnet, dass** der Fußabschnitt (15.1) der Dichtmembran (15) außenumfangsseitig eine polygone oder im Wesentlichen polygone Form aufweist.

5. Fluidventil nach Anspruch 3 oder 4, **dadurch gekennzeichnet, dass** der Fußabschnitt (15.1) der Dichtmembran (15) eine Innenöffnung (15.1.1) aufweist, die innenumfangsseitig eine runde oder polygone Form aufweist.

6. Fluidventil nach einem Ansprüche 3 bis 5, **dadurch gekennzeichnet, dass** das Ventilgehäuse (10) einen Aufnahmeraum (12) mit einer Öffnung (12.1) aufweist und dass der Rand (12.1.1) der Öffnung (12.1) des Aufnahmeraums (12) umfangseitig eine Radialdichtfläche ausbildet, die zur Anlage des Fußbereichs (15.1) der Dichtmembran (15) vorgesehen ist.

7. Fluidventil nach Anspruch 6, **dadurch gekennzeichnet, dass** die Öffnung (12.1) eine rotationsunsymmetrische Umfangsform aufweist.

8. Fluidventil nach einem der Ansprüche 3 bis 7, **dadurch gekennzeichnet, dass** die Antriebseinheit (3) einen Ventilgehäuseträger (8) aufweist, der zur Kopplung mit dem Ventilgehäuse (10) ausgebildet ist und dass der Ventilgehäuseträger (8) einen Fortsatz (8.1) aufweist, der an die Innenöffnung (15.1.1) des Fußabschnitts (15.1) der Dichtmembran (15) formangepasst ist.

9. Fluidventil nach Anspruch 8, **dadurch gekennzeichnet, dass** der Fußabschnitt (15.1) der Dichtmembran (15) durch das Zusammenfügen des Ventilgehäuses (10) und der Antriebseinheit (3) zwischen dem Ventilgehäuse (10) und dem Fortsatz (8.1) des Ventilgehäuseträgers (8) radial verpresst ist.

10. Fluidventil nach einem der Ansprüche 3 bis 9, **dadurch gekennzeichnet, dass** die Dichtmembran (15) einen Kappenabschnitt (15.2) mit einem Innenquerschnitt aufweist, der an die Form des in das Ventilgehäuse (10) hineinragenden Abschnitts des Ventilschließkörpers (2) derart angepasst ist, dass der Abschnitt des Ventilschließkörpers (2) formschlüssig in den Kappenabschnitt (15.2) der Dichtmembran (15) aufgenommen ist.

11. Fluidventil nach Anspruch 10, **dadurch gekennzeichnet, dass** der Kappenabschnitt (15.2) der Dichtmembran (15) einen rechteckförmigen oder im Wesentlichen rechteckförmigen Querschnitt mit einem Paar von Breitseiten (15.2.1) und einem Paar von Schmalseiten (15.2.2) aufweist, wobei die Breitseiten (15.2.1) länger ausgebildet sind als die Schmalseiten (15.2.2).

12. Fluidventil nach Anspruch 11, **dadurch gekennzeichnet, dass** zumindest eine Breitseite (15.2.1) des Kappenabschnitts (15.2) zur Anlage gegenüber einem im Ventilgehäuse (10) ausgebildeten Ventilsitz (13, 14) vorgesehen ist.

13. Fluidventil nach einem der Ansprüche 3 bis 12, **dadurch gekennzeichnet, dass** das Ventilgehäuse (10) eine Koppelkontur (16) zur Verbindung mit der Antriebseinheit (3) aufweist und dass die Koppelkontur (16) derart ausgebildet ist, dass ein in Bezug auf die Drehlage der Antriebseinheit (3) relativ zum Ventilgehäuse (10) vorgegebenes Ankoppeln des Ventilgehäuses (10) an der Antriebseinheit (3) bewirkt wird.

14. Fluidventil nach Anspruch 13, **dadurch gekennzeichnet, dass** die Koppelkontur (16) Kopplungsabschnitte (16.1) umfasst, die zur rastenden Befestigung des Ventilgehäuses (10) an der Antriebseinheit (3) ausgebildet sind.

15. Fluidventil nach einem der Ansprüche 3 bis 14, **dadurch gekennzeichnet, dass** das Ventilgehäuse (10) zumindest eine Aufnahme (17) für eine Schlauchschnellkupplung aufweist.

## Geänderte Patentansprüche

### Geänderte Patentansprüche gemäss Regel 137(2) EPÜ.

1. Dichtmembran für ein Fluidventil (1), das ein Ventilgehäuse (10) und eine Antriebseinheit (3) mit einem Ventilgehäuseträger (8) aufweist, wobei die Dichtmembran (15) hutartig ausgebildet ist und zum freiendseitigen Umschließen eines in das Ventilgehäuse (10) des Fluidventils (1) hineinragenden Abschnitts eines Ventilschließkörpers (2) ausgebildet ist, wobei die Dichtmembran (15) einen Fußabschnitt (15.1) aufweist, der außenumfangsseitig rotationsunsymmetrisch ausgebildet ist, wobei der Fußabschnitt (15.1) dazu vorgesehen ist, an einer Öffnung (12.1) des Ventilgehäuses (10) formschlüssig anzuliegen und wobei der Fußabschnitt (15.1) der Dichtmembran (15) dazu ausgebildet ist, zwischen dem Ventilgehäuse (10) und der Antriebseinheit (3) derart aufgenommen zu werden, dass die Öffnung (12.1) des Ventilgehäuses (10) zur Antriebseinheit (3) hin fluiddicht abgedichtet wird, **dadurch gekennzeichnet, dass** eine Innenöffnung (15.1.1) des Fußabschnitts (15.1) der Dichtmembran (15) dazu ausgebildet ist, innenumfangsseitig an einem Fortsatz (8.1) des Ventilgehäuseträgers (8) anzuliegen, wobei der Fußabschnitt (15.1) der Dichtmembran (15) dazu ausgebildet ist, durch Formanpassung der Innenöffnung (15.1.1) an den Fortsatz (8.1) des Ventilgehäuseträgers (8) beim Zusammenfügen des Ventilgehäuses (10) und der Antriebseinheit (3) zwischen dem Ventilgehäuse (10) und dem Fortsatz (8.1) des Ventilgehäuseträgers (8) radial verpresst zu werden.

2. Dichtmembran nach Anspruch 1, **dadurch gekennzeichnet, dass** der Fußabschnitt (15.1) der Dichtmembran (15) außenumfangsseitig eine polygone oder im Wesentlichen polygone Form aufweist.

3. Fluidventil umfassend eine magnetische Antriebseinheit (3) für einen Ventilschließkörper (2), wobei die Antriebseinheit (3) einen Kern (7), eine abschnittsweise den Kern (7) umgebende Spule (4) und einen durch die Bestromung der Spule (4) und die daraus resultierende Magnetkraft bewegbaren Anker (5) aufweist, wobei der Ventilschließkörper (2) abschnittsweise in ein Ventilgehäuse (10) hineinragt, mit dem Anker (5) in Wirkverbindung steht und durch die Bewegung des Ankers (5) um eine Schwenkachse (SV) verschwenkbar in zumindest eine erste und eine zweite Schwenkstellung positionierbar ist, wobei durch die Schwenkstellung des Ventilschließkörpers (2) eine Fluidverbindung im Ventilgehäuse (10) geschaltet wird, wobei der in das Ventilgehäuse (10) hineinragende Abschnitt des Ventilschließkörpers (2) freiendseitig durch eine Dichtmembran (15) umgeben ist, wobei die Dichtmembran (15) hutartig ausgebildet ist und den in das Ventilgehäuse (10) hineinragenden Abschnitt des Ventilschließkörpers (2) fluiddicht umgibt, wobei die Dichtmembran (15) einen außenumfangsseitig rotationsunsymmetrisch ausgebildeten Fußabschnitt (151) aufweist, der an einer Öffnung (12.1) des Ventilgehäuses (10) formschlüssig anliegt und wobei der Fußabschnitt (15.1) der Dichtmembran (15) zwischen dem Ventilgehäuse (10) und der Antriebseinheit (3) derart aufgenommen ist, dass die Öffnung (12.1) des Ventilgehäuses (10) zur Antriebseinheit (3) hin fluiddicht abgedichtet wird, **dadurch gekennzeichnet, dass** die Antriebseinheit (3) einen Ventilgehäuseträger (8) aufweist, der zur Kopplung mit dem Ventilgehäuse (10) ausgebildet ist und dass der Ventilgehäuseträger (8) einen Fortsatz (8.1) aufweist, der an die Innenöffnung (15.1.1) des Fußabschnitts (15.1) der Dichtmembran (15) formangepasst ist und dass der Fußabschnitt (15.1) der Dichtmembran (15) durch das Zusammenfügen des Ventilgehäuses (10) und der Antriebseinheit (3) zwischen dem Ventilgehäuse (10) und dem Fortsatz (8.1) des Ventilgehäuseträgers (8) radial verpresst ist (S. 16, Z. 11 - 23).

4. Fluidventil nach Anspruch 3, **dadurch gekennzeichnet, dass** der Fußabschnitt (15.1) der Dichtmembran (15) außenumfangsseitig eine polygone oder im Wesentlichen polygone Form aufweist.

5. Fluidventil nach Anspruch 3 oder 4, **dadurch gekennzeichnet, dass** der Fußabschnitt (15.1) der Dichtmembran (15) eine Innenöffnung (15.1.1) aufweist, die innenumfangsseitig eine runde oder polygone Form aufweist.

6. Fluidventil nach einem Ansprüche 3 bis 5, **dadurch gekennzeichnet, dass** das Ventilgehäuse (10) einen Aufnahmeraum (12) mit einer Öffnung (12.1) aufweist und dass der Rand (12.1.1) der Öffnung (12.1) des Aufnahmeraums (12) umfangseitig eine Radialdichtfläche ausbildet, die zur Anlage des Fußbereichs (15.1) der Dichtmembran (15) vorgesehen ist.

7. Fluidventil nach Anspruch 6, **dadurch gekennzeichnet, dass** die Öffnung (12.1) eine rotationsunsymmetrische Umfangsform aufweist.

8. Fluidventil nach einem der Ansprüche 3 bis 7, **dadurch gekennzeichnet, dass** die Dichtmembran (15) einen Kappenabschnitt (15.2) mit einem Innenquerschnitt aufweist, der an die Form des in das Ventilgehäuse (10) hineinragenden Abschnitts des Ventilschließkörpers (2) derart angepasst ist, dass der Abschnitt des Ventilschließkörpers (2) formschlüssig in den Kappenabschnitt (15.2) der Dichtmembran (15) aufgenommen ist.

9. Fluidventil nach Anspruch 8, **dadurch gekennzeichnet, dass** der Kappenabschnitt (15.2) der Dichtmembran (15) einen rechteckförmigen oder im Wesentlichen rechteckförmigen Querschnitt mit einem Paar von Breitseiten (15.2.1) und einem Paar von Schmalseiten (15.2.2) aufweist, wobei die Breitseiten (15.2.1) länger ausgebildet sind als die Schmalseiten (15.2.2).

10. Fluidventil nach Anspruch 9, **dadurch gekennzeichnet, dass** zumindest eine Breitseite (15.2.1) des Kappenabschnitts (15.2) zur Anlage gegenüber einem im Ventilgehäuse (10) ausgebildeten Ventilsitz (13, 14) vorgesehen ist.

11. Fluidventil nach einem der Ansprüche 3 bis 10, **dadurch gekennzeichnet, dass** das Ventilgehäuse (10) eine Koppelkontur (16) zur Verbindung mit der Antriebseinheit (3) aufweist und dass die Koppelkontur (16) derart ausgebildet ist, dass ein in Bezug auf die Drehlage der Antriebseinheit (3) relativ zum Ventilgehäuse (10) vorgegebenes Ankoppeln des Ventilgehäuses (10) an der Antriebseinheit (3) bewirkt wird.

12. Fluidventil nach Anspruch 11, **dadurch gekennzeichnet, dass** die Koppelkontur (16) Kopplungsabschnitte (16.1) umfasst, die zur rastenden Befestigung des Ventilgehäuses (10) an der Antriebseinheit (3) ausgebildet sind.

13. Fluidventil nach einem der Ansprüche 3 bis 12, **dadurch gekennzeichnet, dass** das Ventilgehäuse (10) zumindest eine Aufnahme (17) für eine Schlauchschnellkupplung aufweist.
